# EUROPEAN PATENT APPLICATION

(11) **EP 4 513 393 A1**
(43) Date of publication of application: **26.02.2025**
(21) Application number: 22940069.2
(22) Date of filing: 26.04.2022
(51) Int. Cl.: G06Q 10/00

(54) **PLANT MANAGEMENT DEVICE, PLANT MANAGEMENT METHOD, AND COMPUTER-READABLE STORAGE MEDIUM**

(71) Applicant: NEC Corporation, 108-8001 Tokyo (JP)
(72) Inventor: MIZUGUCHI Koji, Tokyo 108-8001 (JP); KAWAHARAGI Kazunobu, Tokyo 108-8001 (JP)
(74) Representative: Vossius & Partner Patentanwälte Rechtsanwälte mbB
(86) International application number: PCT/JP2022/018813
(87) International publication number: WO 2023/209789

(57) **Abstract**

One of the purposes of the present disclosure is to provide a plant management device and the like which are capable of supporting plant inspection work. A plant management device according to an embodiment of the present disclosure is provided with: a display control means that displays a plant model on a display device , the plant model being an image of a facility included in a plant; and a reception means that receives an operation by a user on the plant model displayed by the display device. The display control means displays, on the display device being operated by the user, information corresponding to a role of the user and the operation of the user.

## Description

### Technical Field

The present disclosure relates to a technique for managing a plant.

### Background Art

A facility that performs various kinds of production, such as a power plant and a facility that produces chemical substances from raw materials such as oil and natural gas, is referred to as a plant. In the plant, facilities in the plant are monitored, inspected, and the like.

In relation to monitoring of facilities in a plant, PTL 1 discloses a system that displays a status of a monitoring target of a plant as a three-dimensional simulation image, in which an operation status of the monitoring target is displayed in a color-coded manner.

Techniques related to a system that displays an image of an object are disclosed in PTLs 2 and 3. PTL 2 discloses a technique of generating a three-dimensional color-coded conductor portion image model in which charging/power failure portions are color-coded from a three-dimensional conductor portion image model according to a charging/power failure state of a conductor portion in an electrical facility. PTL 3 discloses a technique of creating a three-dimensional model of a facility in a building by combining an existing system view and a plan view.

### Citation List

### Patent Literature

PTL 1: JP 09-050314 A
PTL 2: JP 2018-109905 A
PTL 3: JP 08-263541 A

### Summary of Invention

### Technical Problem

Inspection and the like of a plant are performed by an operator and a site worker of the plant. The operator is an employee who manages the driving operation of the plant. The site worker is an employee who performs field work related to a facility of the plant. For example, an operator gives an instruction regarding inspection of a facility of the plant, and a site worker inspects the facility of the plant according to the instruction.

For example, it is assumed that a system for displaying a model of a facility of the plant is used by plant employees including an operator and a site worker. The system causes a terminal used by an operator and a terminal used by a site worker to display a model when a predetermined facility in the plant is inspected. Here, the user of the system that displays the model of the facility of the plant includes an employee of the plant. As described above, the role at the time of inspection is different between the operator and the site worker as an employee. Therefore, display control of the system is required according to a plurality of users.

The present disclosure has been made in view of the above problems, and an object of the present disclosure is to provide a plant management device and the like capable of supporting work in the inspection of a plant.

### Solution to Problem

A plant management device according to an example embodiment of the present disclosure is provided with: a display control means that displays a plant model on a display device, the plant model being an image of a facility included in a plant; and a reception means that receives an operation of a user on the plant model displayed by the display device. The display control means displays, on the display device being operated by the user, information corresponding to a role of the user and the operation of the user.

A plant management method according to an aspect of the present disclosure includes: displaying a plant model on a display device, the plant model being an image of a facility included in a plant; receiving an operation of a user on the plant model displayed by the display device; and displaying on the display device being operated by the user, information corresponding to a role of the user and the operation of the user.

A computer-readable storage medium according to an aspect of the present disclosure stores a program causing a computer to execute: a process of displaying a plant model on a display device, the plant model being an image of a facility included in a plant; and a process of receiving an operation by a user on the plant model displayed by the display device. In the process of displaying, displaying, on the display device being operated by the user, information corresponding to a role of the user and the operation of the user.

### Advantageous Effects of Invention

According to the present disclosure, it is possible to support work in plant inspection.

### Brief Description of Drawings

[Fig. 1] Fig. 1 is a block diagram illustrating an example of a functional configuration of a plant management device according to a first example embodiment of the present disclosure.
[Fig. 2] Fig. 2 is a flowchart for explaining an example of operation of the plant management device according to the first example embodiment of the present disclosure.
[Fig. 3] Fig. 3 is a diagram schematically illustrating an example of a configuration of a plant management system according to a second example embodiment of the present disclosure.
[Fig. 4] Fig. 4 is a block diagram illustrating an example of a functional configuration of a plant management system according to the second example embodiment of the present disclosure.
[Fig. 5] Fig. 5 is a diagram illustrating an example of a plant model according to the second example embodiment of the present disclosure.
[Fig. 6A] Fig. 6A is a diagram illustrating a first example of operation information according to the second example embodiment of the present disclosure.
[Fig. 6B] Fig. 6B is a diagram illustrating a second example of operation information according to the second example embodiment of the present disclosure.
[Fig. 7A] Fig. 7A is a diagram illustrating a first example of an input form according to the second example embodiment of the present disclosure.
[Fig. 7B] Fig. 7B is a diagram illustrating an example of a sensor trend value according to the second example embodiment of the present disclosure.
[Fig. 7C] Fig. 7C is a diagram illustrating an example of information regarding abnormality according to the second example embodiment of the present disclosure.
[Fig. 7D] Fig. 7D is a diagram illustrating a second example of the input form according to the second example embodiment of the present disclosure.
[Fig. 8] Fig. 8 is a flowchart for explaining a first example of the operation of the plant management device according to the second example embodiment of the present disclosure.
[Fig. 9] Fig. 9 is a flowchart for explaining a second example of the operation of the plant management device according to the second example embodiment of the present disclosure.
[Fig. 10] Fig. 10 is a sequence diagram for explaining a first example of the operation of the plant management system according to the second example embodiment of the present disclosure.
[Fig. 11] Fig. 11 is a sequence diagram for explaining a second example of the operation of the plant management system according to the second example embodiment of the present disclosure.
[Fig. 12] Fig. 12 is a block diagram illustrating an example of a functional configuration of a plant management system according to a third example embodiment of the present disclosure.
[Fig. 13] Fig. 13 is a diagram illustrating an example of notification information according to the third example embodiment of the present disclosure.
[Fig. 14] Fig. 14 is a diagram illustrating an example of person-in-charge information according to the third example embodiment of the present disclosure.
[Fig. 15] Fig. 15 illustrates an example of credential information of the third example embodiment of the present disclosure.
[Fig. 16] Fig. 16 is a diagram illustrating another example of notification information according to the third example embodiment of the present disclosure.
[Fig. 17] Fig. 17 is a diagram schematically illustrating an example of a usage status of a plant management system according to a fourth example embodiment of the present disclosure.
[Fig. 18] Fig. 18 is a block diagram illustrating an example of a functional configuration of a plant management system according to the fourth example embodiment of the present disclosure.
[Fig. 19] Fig. 19 is a diagram illustrating an example of display based on extraction information according to the fourth example embodiment of the present disclosure.
[Fig. 20] Fig. 20 is a sequence diagram for explaining an example of an operation of the plant management system according to the fourth example embodiment of the present disclosure.
[Fig. 21] Fig. 21 is a block diagram illustrating an example of a hardware configuration of a computer device that implements the plant management devices according to the first, second, third, and fourth example embodiments of the present disclosure.

### Example Embodiments

Hereinafter, example embodiments of the present disclosure will be described with reference to the drawings.

### <First Example Embodiment>

First, inspection of a plant will be described. The inspection of a plant in the present disclosure is performed by at least an operator of the plant and a site worker. The plant operator is an employee who operates the plant. For example, the operator operates the plant by operating a control panel or the like in a central control room of the plant. The site worker is an employee who performs field work related to a facility included in the plant. The facilities included in the plant are structures such as facilities, piping, wiring, and a tank used for production.

As an example of the inspection of a plant, an operator instructs a site worker. For example, when an abnormality occurs in a facility, the operator instructs the site worker to inspect the facility. The site worker who has received the instruction inspects the facility according to the instruction. The plant management device of the present disclosure is used in such inspection of a plant as an example.

Next, an outline of the plant management device according to the present disclosure will be described.

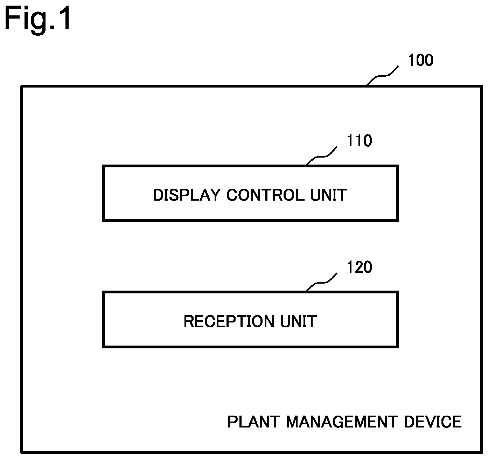

Fig. 1 is a block diagram illustrating an example of a functional configuration of a plant management device 100. As illustrated in Fig. 1, the plant management device 100 includes a display control unit 110 and a reception unit 120.

The display control unit 110 causes the display device to display various types of information. The display device is a device operated by a user such as an operator or a site worker. The display device includes a display or the like capable of displaying various types of information. The display device is, for example, a personal computer connected to a display. The display device is not limited to this example, and may be a portable terminal such as a smartphone, a tablet terminal, and a mobile phone.

The display control unit 110 causes the display device to display a plant model. The plant model is an image showing a facility included in the plant. The plant model is, for example, an image stereoscopically showing an appearance of the facility such as a shape and a structure of the facility. For example, the plant model may be expressed by different objects for each facility. For example, in a case where a pipe and a tank are present as facilities of a plant, the pipe and the tank may be expressed by different objects in a plant model. The data indicating the plant model is stored in a storage device communicably connected to the plant management device 100 or a storage device included in the plant management device 100. For example, the display control unit 110 reads data from the storage device and displays the plant model on the display device.

In this manner, the display control unit 110 displays the plant model on the display device, the plant model being an image of the facility included in the plant. The display control unit 110 is an example of a display control means.

The reception unit 120 receives an operation by the user. The user performs an operation on the plant model displayed by the display device. For example, the user performs an operation of selecting an object of the plant model. In this case, the reception unit 120 receives an operation of selecting an object.

In this manner, the reception unit 120 receives an operation of the user on the plant model displayed by the display device. The reception unit 120 is an example of a reception means.

The display control unit 110 displays, on the display device, information corresponding to the operation received by the reception unit 120. For example, it is assumed that an operation of selecting an object of a plant model is received by the reception unit 120. The display control unit 110 causes displaying, for example, operation information regarding a facility relevant to the selected object. The operation information related to the facility may be an operation menu related to the facility or an input form that receives an input by a user. The present invention is not limited to this example, and the display control unit 110 may cause displaying, as the operation information regarding a facility, information indicating an operation status regarding a facility, information indicating a method of using a facility, information indicating specifications of a facility, and the like.

At this time, the display control unit 110 may display information corresponding to the operation according to the role of the user. Examples of user roles are plant operators and plant site workers. For example, the display control unit 110 changes the contents to be displayed depending on whether the user is an operator or a site worker. At this time, the display control unit 110 may change the contents to be displayed depending on the case where the operation received by the reception unit 120 is performed on the display device operated by the operator and the case where the operation is performed on the display device operated by the site worker. For example, in a case where an object of a plant model is selected, the display control unit 110 causes the display device to display an operation menu related to the facility relevant to the selected object. For example, in a case where an object is selected by the operator, the display control unit 110 causes the display device to display an operation menu including an item for requesting the site worker to inspect the facility. For example, in a case where an object is selected by a site worker, the display control unit 110 causes the display device to display an operation menu including an item for inputting information regarding an abnormality having occurred in the facility. Not limited to this example, in a case where an object is selected by the operator, the display control unit 110 may cause displaying an input form for inputting information for instructing a facility relevant to the selected object. Then, in a case where an object is selected by the site worker, the display control unit 110 may cause displaying an input form for inputting information regarding an abnormality that has occurred in a facility relevant to the selected object.

In this manner, the display control unit 110 displays, on the display device being operated by the user, information corresponding to the role of the user and operation of the user.

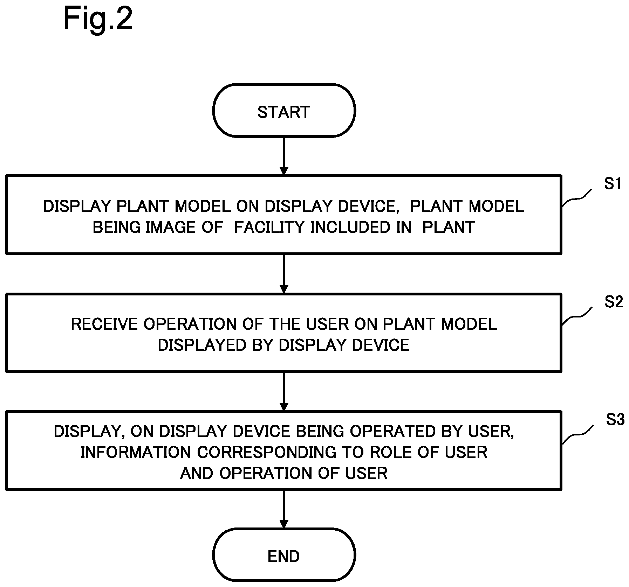

Next, an example of the operation of the plant management device 100 will be described with reference to Fig. 2. In the present disclosure, each step of the flowchart is expressed using a number assigned to each step, such as "S1".

Fig. 2 is a flowchart for explaining an example of the operation of the plant management device 100. The display control unit 110 displays a plant model on the display device, the plant model being an image of a facility included in the plant (S1). The reception unit 120 receives an operation of the user on the plant model displayed by the display device (S2). Then, the display control unit 110 displays, on the display device being operated by the user, information corresponding to the role of the user and operation of the user (S3).

As described above, the plant management device 100 according to the first example embodiment displays a plant model on the display device, the plant model being an image of the facility included in the plant, and receives an operation of the user on the plant model displayed by the display device. Then, the plant management device 100 displays, on the display device being operated by the user, information corresponding to the role of the user and the operation of the user.

The operator and the site worker of the plant have different roles at the time of inspection. Therefore, work performed at the time of inspection, necessary information, and the like are different between the operator and the site worker. On the other hand, for example, since the plant management device 100 can control information to be displayed according to the user, it is possible to provide a user interface according to the user or preferentially provide necessary information according to the user. That is, the plant management device 100 can support work in the inspection of the plant.

### <Second Example Embodiment>

Next, a plant management device according to a second example embodiment will be described. In the second example embodiment, the plant management device 100 described in the first example embodiment will be described in more detail. The description of contents overlapping with the contents described in the first example embodiment will be partially omitted.

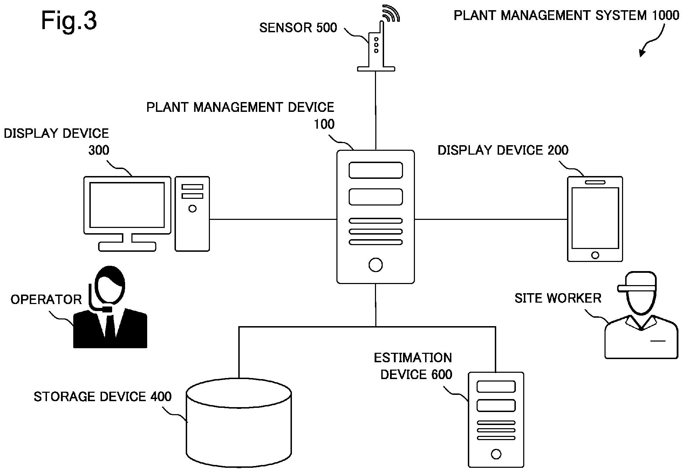

Fig. 3 is a diagram schematically illustrating an example of a configuration of a plant management system 1000. As illustrated in Fig. 3, the plant management system 1000 includes a plant management device 100. In the example of Fig. 3, the plant management system 1000 includes a plant management device 100, a display device 200, a display device 300, a storage device 400, a sensor 500, and an estimation device 600. The plant management device 100 can communicate with the display device 200, the display device 300, the storage device 400, the sensor 500, and the estimation device 600 via a wireless or wired network.

The display device 200 is a device operated by a site worker. The site worker performs field work related to the facility of the plant while confirming information displayed on the display device 200, and inputs information using the display device 200. The display device 200 is, for example, a portable terminal such as a smartphone, a tablet terminal, a mobile phone, or a laptop personal computer. The display device 200 may be a wearable terminal. Examples of the wearable terminal include a goggle-type terminal and a wristwatch-type terminal. Hereinafter, the display device 200 is also referred to as a worker terminal 200. The site worker is also simply referred to as a worker.

The display device 300 is a device operated by an operator. The operator considers measures for the facility while confirming the information displayed on the display device 300, or inputs information using the display device 300. Hereinafter, the display device 300 is also referred to as an operator terminal 300.

The storage device 400 stores various types of information. For example, the storage device 400 stores data indicating a plant model, data acquired by the sensor 500, data regarding a history of repair performed on the facility, and the like. Details of the data stored in the storage device 400 will be described later. The storage device 400 may be provided in the plant management device 100.

The sensor 500 is a sensor installed in a facility of a plant. The sensor 500 is, for example, a temperature sensor, a pressure sensor, a voltage sensor, an optical sensor, or the like, but is not limited to these examples. The sensor 500 may be any sensor as long as it can measure information related to the situation of the facility of the plant. A plurality of sensors 500 may be installed.

The estimation device 600 is a device that performs failure estimation regarding a facility of the plant based on various types of data.

The operator and the worker share information via the plant management system 1000. For example, the worker inputs that an abnormality has occurred in a facility of the plant by operating the worker terminal 200. For example, the plant management device 100 causes the operator terminal 300 to output information input by the worker. Then, for example, the operator inputs an instruction for the generated abnormality by operating the operator terminal 300. For example, the plant management device 100 causes the worker terminal 200 to output the input instruction. In this manner, the plant management system 1000 supports two-way communication between the operator and the worker.

### [Details of Plant Management System 1000]

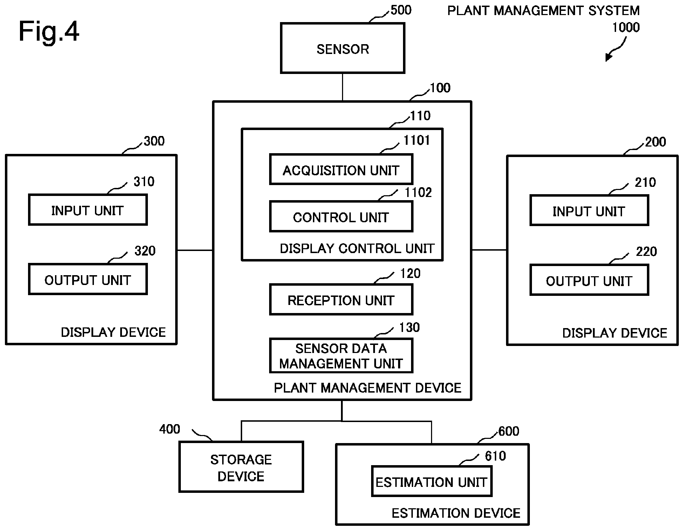

Fig. 4 is a block diagram illustrating an example of a functional configuration of the plant management system 1000. As illustrated in Fig. 4, the plant management device 100 is communicably connected to the worker terminal 200 (that is, the display device 200), the operator terminal 300 (that is, the display device 300), the storage device 400, the sensor 500, and the estimation device 600.

The worker terminal 200 includes an input unit 210 and an output unit 220. The input unit 210 receives an input from the worker. For example, the input unit 210 receives a signal from an input device connected to the worker terminal 200. The input device is, for example, a device operated by the user, such as a mouse and a keyboard. The present invention is not limited to this example, and in a case where the worker terminal 200 has a touch panel, the input unit 210 may receive a signal by the user operating the touch panel. The output unit 220 outputs various types of information. For example, the output unit 220 displays the plant model on a display included in the worker terminal 200. The output unit 220 may be controlled by the plant management device 100. A plurality of worker terminals 200 may be provided. For example, the worker terminal 200 may be a terminal possessed by each of a plurality of workers.

The operator terminal 300 includes an input unit 310 and an output unit 320. The input unit 310 is similar to the input unit 210 of the worker terminal 200. That is, the input unit 310 receives a signal generated when the user of the operator terminal 300 operates the input device. The output unit 320 is similar to the output unit 220 of the worker terminal 200. That is, the output unit 320 displays various types of information regarding the display included in the operator terminal 300. The output unit 320 may be controlled by the plant management device 100. A plurality of operator terminals 300 may be provided.

The sensor 500 transmits the sensor data to the plant management device 100. The sensor data is data related to a value measured by the sensor 500. For example, in a case where the sensor 500 is a temperature sensor, the sensor data is data indicating a temperature measured by the temperature sensor. The sensor data includes sensor identification information. The sensor identification information is information for identifying the sensor 500.

The plant management device 100 includes a display control unit 110, a reception unit 120, and a sensor data management unit 130. The display control unit 110 includes an acquisition unit 1101 and a control unit 1102. The acquisition unit 1101 acquires data. For example, the acquisition unit 1101 acquires data stored in the storage device 400.

An example of the data stored in the storage device 400 is data indicating a plant model. Data indicating the plant model is stored in the storage device 400 in advance. The plant model includes a three-dimensional model indicating a shape and a structure of a facility in the plant. The three-dimensional model is generated based on, for example, point data related to the facility. For example, the measuring instrument photographs the inside of the plant. The measuring instrument is a device capable of 3D-scanning such as three-dimensional light detection and ranging (3D-LiDAR). Then, the point data of the facility in the plant is created from the data captured by the measuring instrument. Then, points processing software converts the point data to generate a three-dimensional model of the facility. The method of creating the plant model may be various existing methods.

Another example of the data stored in the storage device 400 is facility information. The facility information is information regarding a facility included in a plant. The facility information may include an operation log of the facility, a repair history of the facility, a design drawing of the facility, a specification of the facility, a work procedure manual related to the facility, performance information of the facility, a sensor trend value related to the facility, and the like. The repair history is information indicating a history of repair work performed on the facility. The design drawing is information indicating a shape, a structure, dimensions, and the like of the facility. The specification is information including description of functions, characteristics, and the like of the facility. The work procedure manual is information indicating a procedure of work performed on the facility. The performance information is information indicating an actual measurement value of performance of the facility being operated. The sensor trend value is information including sensor data measured by the sensor 500. The sensor trend value is information managed by the sensor data management unit 130 described later. In this manner, the acquisition unit 1101 may acquire various types of data stored in the storage device 400.

The sensor data management unit 130 acquires sensor data from the sensor 500. The sensor data management unit 130 may periodically acquire the sensor data. The sensor data management unit 130 stores the acquired sensor data in the storage device 400. At this time, the sensor data management unit 130 may aggregate sensor data for each facility in which the sensor 500 is installed and store the sensor data as a sensor trend value.

One or more sensors 500 are installed in one or more facilities in the plant. Therefore, the sensor data management unit 130 aggregates the sensor data of the sensors 500 installed in the same facility. At this time, the sensor data management unit 130 stores the sensor data of the sensors installed in the same facility in association with facility identification information for identifying the facility. For example, it is assumed that a temperature sensor and a pressure sensor are installed in a cooling water pump. At this time, the sensor data management unit 130 associates the facility identification information with each of the sensor data of the temperature sensor and the sensor data of the pressure sensor. Then, the sensor data management unit 130 may store each piece of sensor data associated with the facility identification information in the storage device 400 as a sensor trend value relevant to the cooling water pump. In this case, information in which the sensor identification information and the facility identification information of the facility in which the sensor is installed are associated with each other is stored in the storage device 400 in advance. The sensor data management unit 130 specifies facility identification information relevant to the sensor identification information from the sensor identification information included in the acquired sensor data.

The acquisition unit 1101 may acquire data from the estimation device 600. Specifically, the acquisition unit 1101 acquires failure estimation data regarding the facility included in the plant from the estimation device 600. The failure estimation data is information indicating a sign of failure of the facility. The failure estimation data is generated by the estimation device 600.

The estimation device 600 includes an estimation unit 610. The estimation unit 610 performs failure estimation of a facility included in the plant. The estimation unit 610 estimates the presence or absence of a failure sign for the facility based on, for example, sensor data of the facility, an operation log, and the like stored in the storage device 400. The method for estimating the presence or absence of a failure sign may be various existing methods.

For example, the estimation unit 610 estimates the presence or absence of a failure sign by a rule-based method. At this time, in a case where the value measured by the sensor 500 exceeds a predetermined threshold, the estimation unit 610 may estimate that a sign of failure appears in the facility. Specifically, in a case where the temperature measured by the temperature sensor installed in the facility exceeds the temperature indicated as the threshold, it may be estimated that a sign of failure appears in the facility of the estimation unit 610.

The estimation unit 610 may estimate the presence or absence of a failure sign using machine learning. In this case, a learning model in which the relationship between the sensor data, the operation log, and the like and the failure of the facility is learned is generated in advance. In the learning model, sensor data, an operation log, and the like are input, and the presence or absence or probability of a failure of a facility is output. For example, the estimation unit 610 acquires information indicating the presence or absence of a failure of the facility which is output by using the learning model. Then, in a case where it is output that a failure of the facility occurs, the estimation unit 610 may estimate that a sign of failure appears in the facility.

The estimation unit 610 transmits failure estimation data indicating the presence or absence of a failure sign for the facility to the plant management device 100.

The control unit 1102 of the plant management device 100 causes at least one of the worker terminal 200 and the operator terminal 300 to display the data acquired by the acquisition unit 1101. For example, it is assumed that the acquisition unit 1101 acquires data indicating a plant model. The control unit 1102 causes the worker terminal 200 or the operator terminal 300 to display the plant model. Here, in a case where the plant model is displayed on the worker terminal 200, the control unit 1102 may perform control to cause the output unit 220 of the worker terminal 200 to display the plant model, for example.

The reception unit 120 receives an operation on the displayed plant model. Then, the control unit 1102 causes displaying information relevant to the operation received by the reception unit 120. Information relevant to the received operation is referred to as operation information. Here, the control unit 1102 controls the operation information according to the situation. Hereinafter, a specific example of the operation information will be described with reference to the drawings.

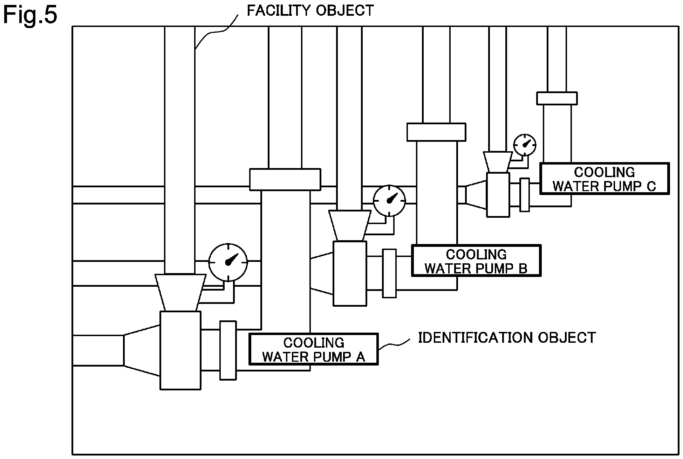

Fig. 5 is an example of a plant model. In the example of Fig. 5, three cooling water pumps are illustrated as an example of a facility included in the plant. In this example, the plant model includes a facility object and an identification object. The facility object is an object indicating an appearance of the facility. For example, the facility object is a three-dimensional model of the facility. The facility object is illustrated as an object different for each facility. For example, the facility object may be indicated in different colors for each facility. The identification object is an object displayed to identify the facility. In the example of Fig. 5, identification objects described as a cooling water pump A, a cooling water pump B, and a cooling water pump C are illustrated. The identification objects are respectively relevant to different facility objects. Thus, the plant model includes an object. Each of the objects is associated with a specific facility. Each of the objects may be associated with each component of the facility.

Here, it is assumed that the user performs an operation of selecting an identification object. That is, it is assumed that the user performs an operation of selecting a facility relevant to an object. In this case, the control unit 1102 causes displaying operation information regarding the facility (that is, the selected facility) relevant to the selected object. For example, the control unit 1102 displays an operation menu related to the facility relevant to the selected object. At this time, the control unit 1102 causes displaying different operation menus according to the role of the user who has performed the operation. That is, the control unit 1102 causes displaying different operation menus depending on whether the user who has performed the operation is an operator or a worker.

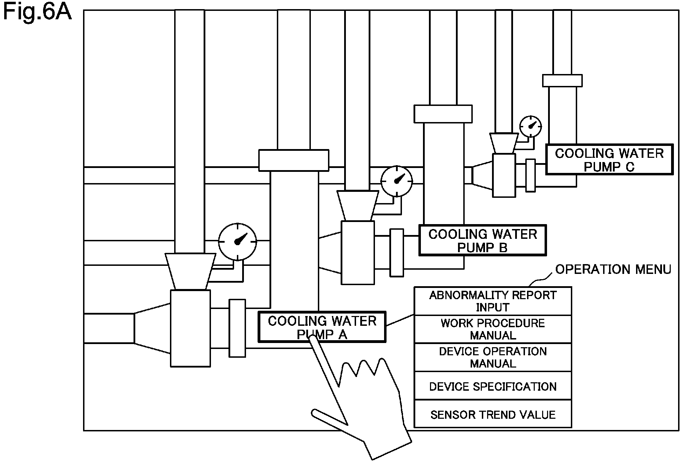

Fig. 6A is a first example of the operation information. More specifically, Fig. 6A is an example of operation information in a case where the user is a worker. For example, the worker touches the identification object of the cooling water pump A displayed on the worker terminal 200. At this time, the reception unit 120 receives an operation of touching the identification object as an operation of selecting the cooling water pump A. Then, the control unit 1102 causes the worker terminal 200 to display an operation menu relevant to the worker. In the example of Fig. 6A, an operation menu including items of "abnormality report input", "work procedure manual", "device operation manual", "device specification", and "sensor trend value" is displayed. Processing in a case where the item of the operation menu is selected will be described later.

For example, the item of "abnormality report input" is an item for accessing information for reporting the abnormality generated in the cooling water pump A. For example, the item "device operation manual" is an item for accessing the operation manual of the cooling water pump A. The worker performs field work related to the facility of the plant. Therefore, the operation menu relevant to the worker includes, for example, items for accessing information necessary for performing the field work, information for making a report in a case where an abnormality occurs in the facility, and the like. The information included in the operation menu is not limited to this example. The operation menu may further include items for accessing instruction contents from an operator, a design drawing of a facility, and the like. For example, in a case where an instruction is input from the worker, the control unit 1102 may include an item for accessing the instruction content in the operation menu.

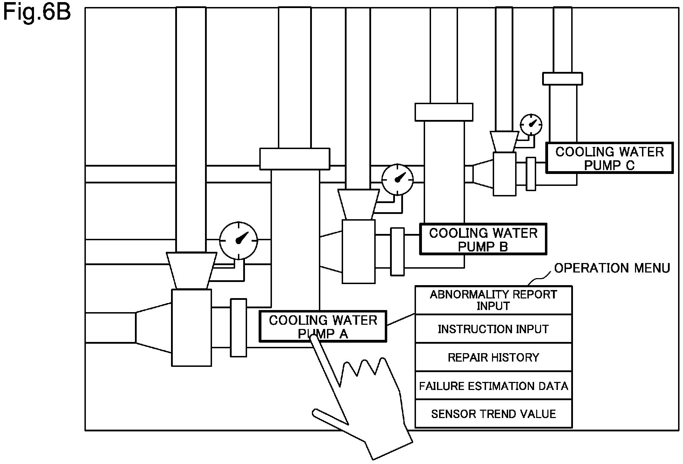

Fig. 6B illustrates a second example of the operation information. For example, the operator touches the identification object of the cooling water pump A displayed on the operator terminal 300. At this time, the reception unit 120 receives an operation of touching the identification object as an operation of selecting the cooling water pump A. Then, the control unit 1102 causes the operator terminal 300 to display an operation menu relevant to the operator. In the example of Fig. 6B, an operation menu including items of "abnormality report reference", "instruction input", "repair history", "failure estimation data", and "sensor trend value" is displayed.

For example, the item of "abnormality report reference" is information input by the worker, and is an item for accessing information regarding the abnormality generated in the cooling water pump A. For example, the item of "instruction input" is an item for accessing information for inputting contents instructed by the operator to the worker. The operator grasps the generated abnormality, formulates a measure against the abnormality, and gives instructions to the worker. Therefore, the operation menu relevant to the operator includes, for example, items for accessing information for confirming a report on an abnormality from the worker, information necessary for formulating a measure against the abnormality, information for giving an instruction to the worker, and the like. The information included in the operation menu is not limited to this example. For example, the operation menu may include items for accessing a work procedure manual, performance information, and the like.

The operation menu displayed in each of the case where the user is an operator and the case where the user is a worker is not limited to the above example. For example, the control unit 1102 may cause displaying the operation menu such that the order of the items of the operation menu varies according to the role of the user. In this case, an item for accessing information necessary for the user is displayed at a high level.

In this manner, the control unit 1102 causes the display device, which is operated by the user, to display the operation information regarding the specific facility indicated by the selected object. At this time, the operation information regarding the specific facility differs between the case where the role of the user is an operator and the case where the role of the user is a worker.

The method of identifying the role of the user who has performed the operation may be various methods. For example, the reception unit 120 may identify the role of the user by identifying the type of the display device on which the operation has been performed. For example, in a case where an operation is performed by the worker terminal 200, the reception unit 120 identifies the role of the user as a worker. Then, in a case where the operation is performed by the operator terminal 300, the reception unit 120 may identify the role of the user as an operator. The reception unit 120 may identify the role of the user from the type of the user who has performed the operation, instead of the display device on which the operation has been performed. For example, the user logs in to the plant management system 1000 when causing the display device to display the plant model. The user inputs user identification information for identifying the user as login information when logging in. The user identification information is an example of information indicating the type of the user. The user identification information is associated with information indicating the role of the user. The reception unit 120 may identify whether the user who has performed the operation is an operator or a worker based on user identification information input at the time of login. As described above, the control unit 1102 controls in such a way that the information is different based on a type set according to a case where the role of the user is an operator of the plant and a case where the role of the user is a site worker of the plant.

Next, processing in a case where an item of the operation menu is selected will be described. The reception unit 120 receives an operation of selecting an item. The control unit 1102 causes displaying information relevant to the selected item.

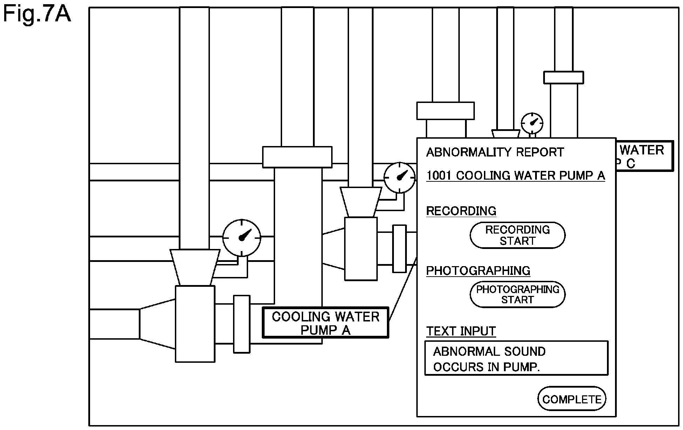

**In** the example of Fig. 6A, it is assumed that the worker selects the item of "abnormality report input". At this time, the reception unit 120 receives an operation of selecting an item. Then, the display control unit 110 causes the worker terminal 200 to display an input form capable of inputting information regarding the abnormality. Fig. 7A is a diagram illustrating a first example of the input form. **In** the example of Fig. 7A, an input form relating to the cooling water pump A is illustrated. The reception unit 120 receives an input of information regarding an abnormality from the worker via the input form. At this time, the reception unit 120 may receive input of at least one of text, voice, and image. For example, in the example of Fig. 7A, when the start of recording is selected by the worker, recording is performed using the microphone included in the worker terminal 200. As a result, the plant management device 100 can acquire a voice including an abnormal sound in a case where the abnormal sound occurs in the facility, for example. For example, when start of photographing is selected by the worker, the camera included in the worker terminal 200 is activated and photographing is performed. As a result, the plant management device 100 can acquire an image showing the appearance of the facility in which the abnormality occurs.

The reception unit 120 stores the input information regarding the abnormality in the storage device 400. At this time, the reception unit 120 stores the facility identification information of the selected facility and the input information regarding the abnormality in association with each other. As described above, the reception unit 120 may receive the input of the information regarding the abnormality of the specific facility from the display device operated by the worker.

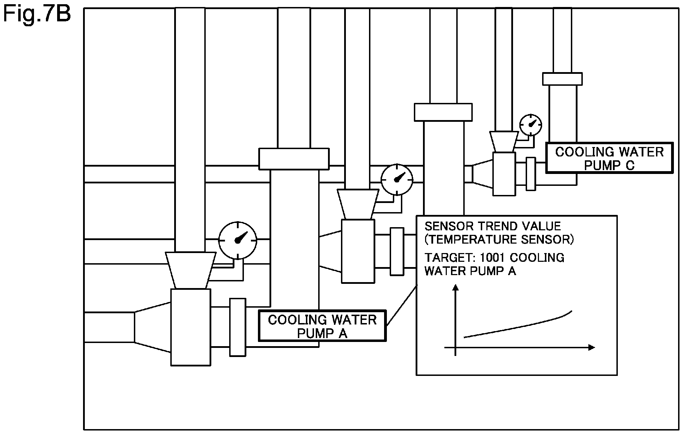

In the example of Fig. 6A, it is assumed that the worker selects the item of "sensor trend value". At this time, the reception unit 120 receives an operation of selecting an item. Then, the display control unit 110 causes the worker terminal 200 to display the sensor trend value related to the selected facility. In this case, the acquisition unit 1101 acquires the selected facility, that is, the sensor trend value of the cooling water pump A from the storage device 400. Then, the control unit 1102 causes the worker terminal 200 to display the acquired sensor trend value. Fig. 7B is a diagram illustrating an example of the sensor trend value. In the example of Fig. 7B, information indicating a sensor trend value of a temperature sensor related to the cooling water pump A is displayed. In this manner, the display control unit 110 may cause displaying information regarding the selected facility.

In the example of Fig. 6B, it is assumed that the operator selects the item of "abnormality report reference". At this time, the reception unit 120 receives an operation of selecting an item. Then, the display control unit 110 causes the operator terminal 300 to display the information regarding the abnormality input by the worker. In this case, the acquisition unit 1101 acquires the information regarding the abnormality of the cooling water pump A from the storage device 400. Then, the control unit 1102 causes the operator terminal 300 to display the acquired information regarding the abnormality.

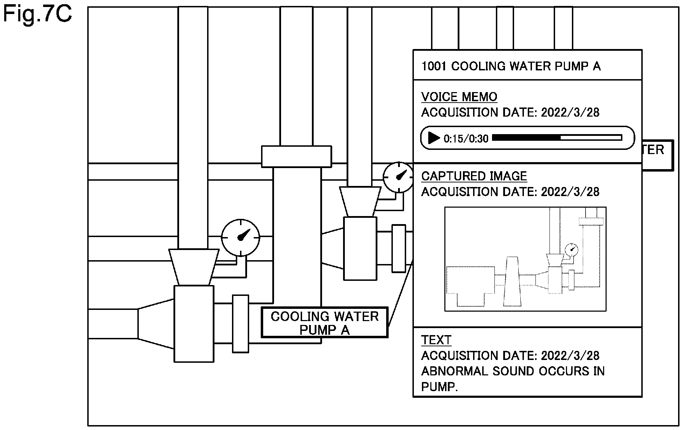

Fig. 7C is a diagram illustrating an example of information regarding abnormality. In the example of Fig. 7C, the information about the abnormality of the cooling water pump A input in the example of Fig. 7A is illustrated. More specifically, the control unit 1102 causes displaying information including text, voice, and image input by the worker. In the example of Fig. 7C, the input voice is displayed as a voice memo. The input image is displayed as a captured image. At this time, the control unit 1102 may highlight the object indicating the facility that is the target of the information regarding the abnormality. For example, the control unit 1102 may impart a color to the facility object of the cooling water pump A, thicken the contour line of the facility object, or blink the facility object. The operator checks information regarding the abnormality to formulate a measure against the abnormality.

Here, the display control unit 110 may cause displaying information regarding a specific facility in addition to information regarding an abnormality of the specific facility. Specifically, in addition to the information regarding the abnormality of the cooling water pump A, the acquisition unit 1101 acquires at least one of the repair history of the cooling water pump A, the sensor trend value of the sensor 500 related to the cooling water pump A, and the failure estimation data of the cooling water pump A from the storage device 400. Then, the control unit 1102 may cause the operator terminal 300 to display the acquired information regarding the cooling water pump A. As described above, the display control unit 110 may cause the display device, which is operated by the operator, to display the information regarding the abnormality input by the worker and the information regarding the specific facility. The information regarding the specific facility at this time may include any of a repair history of the specific facility, a sensor trend value of a sensor related to the specific facility, and failure estimation data indicating a sign of failure of the specific facility. As a result, the operator can formulate a measure against the abnormality in consideration of various types of data.

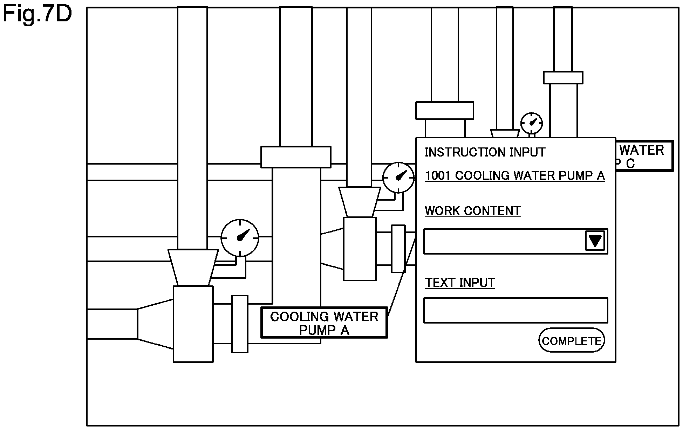

**In** the example of Fig. 6B, it is assumed that the operator selects the item of "instruction input". At this time, the reception unit 120 receives an operation of selecting an item. Then, the display control unit 110 causes the operator terminal 300 to display an input form capable of inputting instruction information indicating the content of work on the facility. Fig. 7D is a diagram illustrating a second example of the input form. **In** the example of Fig. 7D, an input form related to an instruction of work to be performed on the cooling water pump A is illustrated. The reception unit 120 receives an input of instruction information from the operator via the input form. **In** the example of Fig. 7D, information prompting input of work content and input of text is illustrated. As the work content, for example, a work procedure manual relevant to the work is set. The present invention is not limited to this example, and the reception unit 120 may receive voice and image inputs. The reception unit 120 stores the input instruction information in the storage device 400. At this time, the reception unit 120 stores the facility identification information of the selected facility and the input instruction information in association with each other.

The instruction information is displayed on the worker terminal 200 by the display control unit 110. When displaying the instruction information regarding the worker terminal 200, the display control unit 110 may highlight the object of a facility for the work indicated in the instruction information. For example, it is assumed that the instruction information is work on the cooling water pump A. At this time, the control unit 1102 may impart a color to the facility object indicating the cooling water pump A, thicken the contour line of the facility object, or blink the facility object.

As described above, the reception unit 120 may receive the input of the instruction information including the content of the work from the display device operated by the operator of the plant. The display control unit 110 may cause the display device, which is operated by a site worker of the plant, to display the input instruction information.

### [Operation Example 1 of Plant Management Device 100]

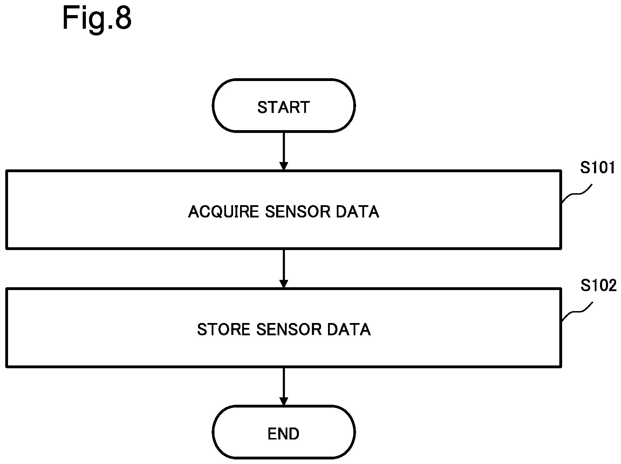

Next, an example of the operation of the plant management device 100 will be described with reference to Fig. 8. In the present operation example, an operation when sensor data is acquired from the sensor 500 will be described.

Fig. 8 is a flowchart for explaining a first example of the operation of the plant management device 100. The sensor data management unit 130 acquires sensor data from the sensor 500 (S101). At this time, the sensor data management unit 130 periodically acquires sensor data, for example. Then, the sensor data management unit 130 stores the acquired sensor data in the storage device 400 (S102). At this time, the sensor data management unit 130 stores the acquired sensor data and the facility identification information of the facility in which the sensor is installed in association with each other as a sensor trend value.

### [Operation Example 2 of Plant Management Device 100]

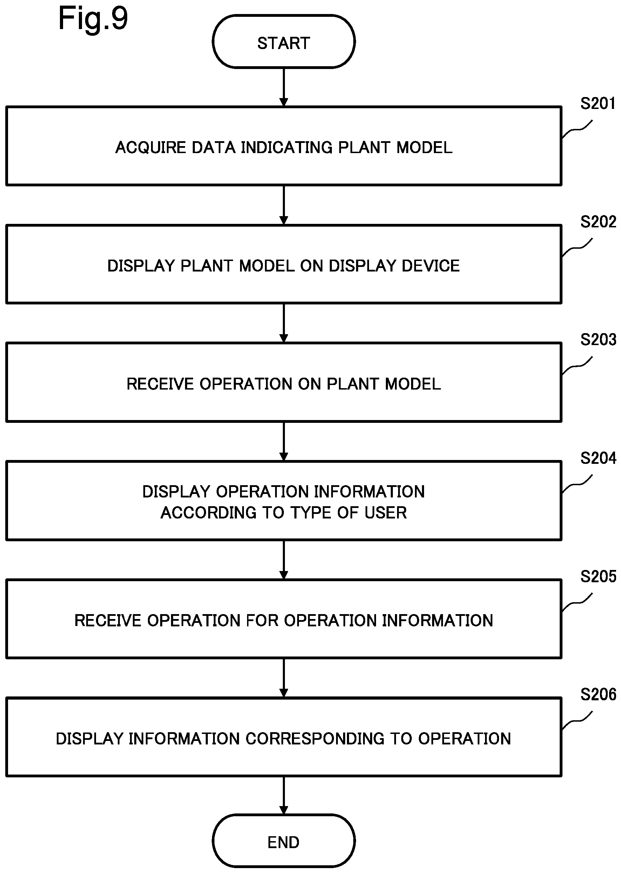

Next, another example of the operation of the plant management device 100 will be described with reference to Fig. 9. In the present operation example, an operation in a case where an operation by the user is performed in the display device operated by the user will be described.

Fig. 9 is a flowchart for explaining a second example of the operation of the plant management device 100. First, the acquisition unit 1101 acquires data indicating the plant model from the storage device 400 (S201). Then, the control unit 1102 displays the plant model on the display device (S202).

The reception unit 120 receives an operation on the plant model by the user (S203). For example, the reception unit 120 receives an operation of selecting an object included in the plant model. Then, the control unit 1102 displays the operation information according to the role of the user (S204). For example, the control unit 1102 causes displaying different operation menus depending on whether the user is an operator or a worker.

The reception unit 120 receives an operation for the operation information (S205). For example, the reception unit 120 receives an operation of selecting an item of an operation menu. Then, the control unit 1102 displays information corresponding to the operation (S206). For example, in a case where an item for reporting an abnormality is selected, the control unit 1102 causes displaying an input form for inputting information regarding the abnormality. In a case where the item of the facility information such as the sensor trend value is selected in the process of S205, the acquisition unit 1101 acquires the facility information from the storage device 400. Then, the control unit 1102 causes displaying the facility information.

### [Operation Example of Plant Management System 1000]

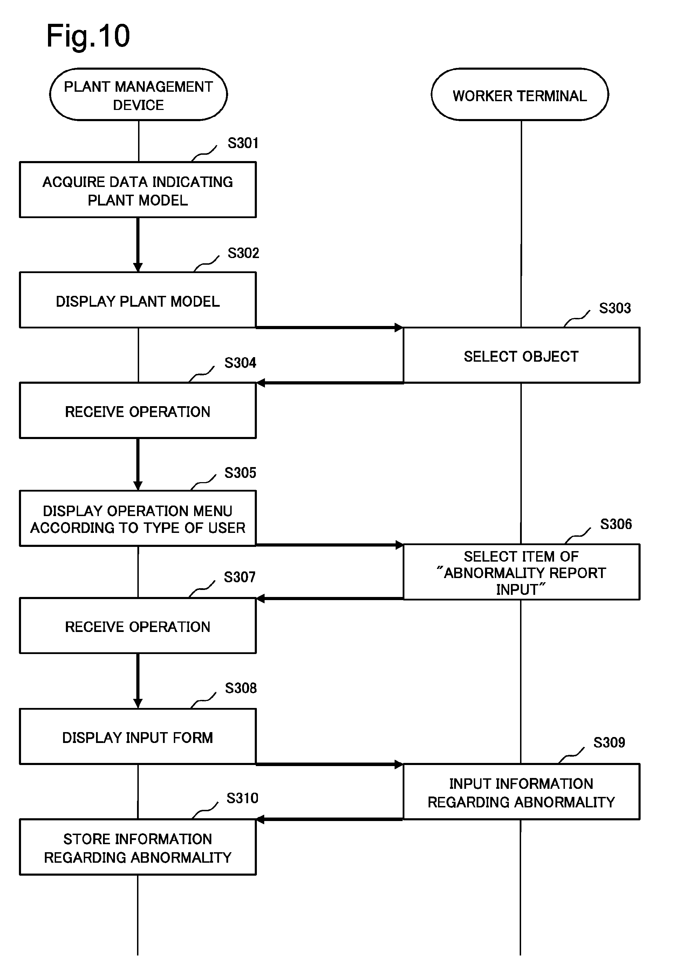

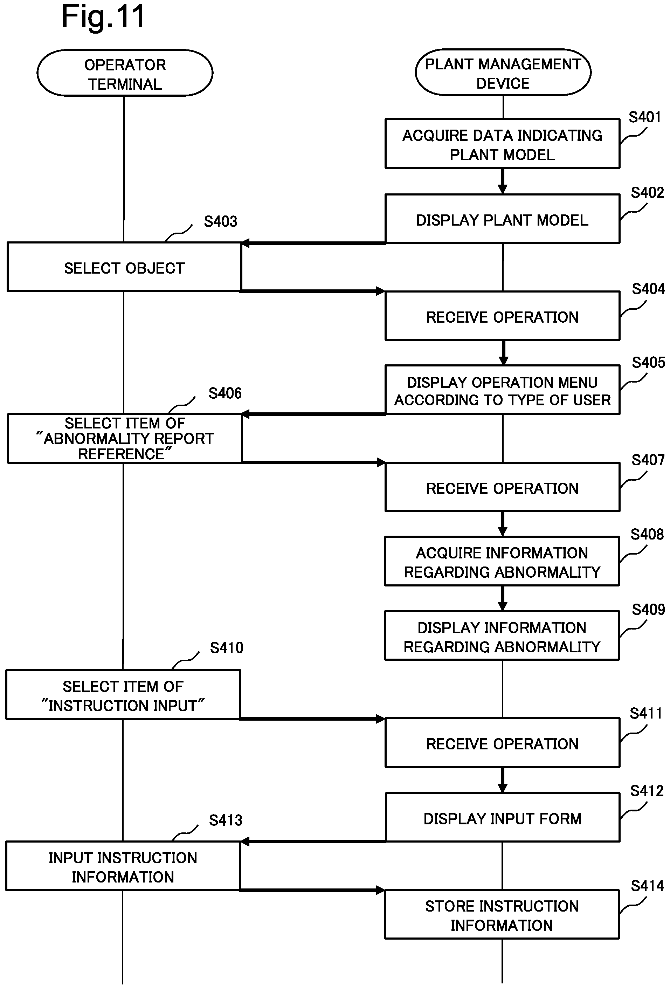

Next, an example of a specific operation of the plant management system 1000 will be described with reference to Figs. 10 and 11. In the present operation example, an example of exchange performed between the worker terminal 200 and the operator terminal 300 when an abnormality occurs in a facility will be described.

Fig. 10 is a sequence diagram for explaining a first example of the operation of the plant management system 1000. More specifically, Fig. 10 is an operation example of the plant management system 1000 in a case where the worker operates the worker terminal 200. First, the acquisition unit 1101 acquires data indicating the plant model from the storage device 400 (S301). Then, the control unit 1102 displays, on the worker terminal 200, the plant model (S302).

In the worker terminal 200, the plant model is displayed via the output unit 220. Then, the object included in the plant model is selected in the input unit 210 (S303).

The reception unit 120 receives an operation of selecting an object (S304). The control unit 1102 displays an operation menu according to the role of the user (S305). Here, since the user is a worker, the control unit 1102 causes the worker terminal 200 to display the operation menu illustrated in Fig. 6A.

In the worker terminal 200, an operation menu is displayed via the output unit 220. Then, the item of "abnormality report input" is selected in the input unit 210 (S306).

The reception unit 120 receives an operation of selecting an item (S307). Since the item of "abnormality report input" is selected, the control unit 1102 displays an input form for inputting information regarding the abnormality (S308).

In the worker terminal 200, an input form is displayed via the output unit 220. Then, in the input unit 210, information regarding the abnormality is input (S309).

The reception unit 120 acquires the information regarding the abnormality, and stores the information about the abnormality in the storage device 400 (S310).

Fig. 11 is a sequence diagram for explaining a second example of the operation of the plant management system 1000. More specifically, Fig. 11 is an operation example of the plant management system 1000 in a case where the operator operates the operator terminal 300. First, the acquisition unit 1101 acquires data indicating the plant model from the storage device 400 (S401). Then, the control unit 1102 displays the plant model on the operator terminal 300 (S402).

In the operator terminal 300, the plant model is displayed via the output unit 320. Then, the object included in the plant model is selected in the input unit 310 (S403).

The reception unit 120 receives an operation of selecting an object (S404). The control unit 1102 display an operation menu according to the role of the user (S405). Here, since the user is an operator, the control unit 1102 causes the operator terminal 300 to display the operation menu illustrated in Fig. 6B.

In the operator terminal 300, an operation menu is displayed via the output unit 320. Then, the item of "abnormality report reference" is selected in the input unit 310 (S406).

The reception unit 120 receives an operation of selecting an item (S407). Since the item "abnormality report reference" is selected, the acquisition unit 1101 acquires information regarding abnormality (S408). Then, the control unit 1102 displays the acquired information regarding the abnormality (S409). At this time, the display control unit 110 may also cause displaying information regarding a facility that is a target of the generated abnormality (that is, a facility relevant to the selected object). For example, the acquisition unit 1101 acquires failure estimation data of the facility from the storage device 400. Then, the control unit 1102 may cause displaying the acquired failure estimation data.

Thereafter, in the operator terminal 300, the item of "instruction input" of the operation menu is selected by the input unit 310 (S410). That is, the operator selects the item of "instruction input".

The reception unit 120 receives an operation of selecting an item (S411). Since the item of "instruction input" is selected, the control unit 1102 displays an input form in which instruction information indicating the content of work on the facility can be input (S412).

**In** the operator terminal 300, an input form is displayed via the output unit 320. Then, the instruction information is input in the input unit 310 (S413).

The reception unit 120 acquires the instruction information, and stores the information regarding the abnormality in the storage device 400 (S414).

The instruction information is displayed on the worker terminal 200 similarly to the information regarding the abnormality.

As described above, the plant management device 100 according to the second example embodiment displays the plant model on the display device, the plant model being an image of a facility included in the plant, and receives an operation of the user on the plant model displayed by the display device. Then, the plant management device 100 displays, on the display device being operated by the user, information corresponding to the role of the user and the operation of the user.

As an example, the plant management device 100 according to the second example embodiment receives an operation of selecting an object included in a plant model, and displays, on the display device being operated by the user, operation information regarding a specific facility indicated by the selected object. At this time, the operation information regarding the specific facility differs between the case where the role of the user is an operator of the plant and the case where the role of the user is a site worker of the plant.

Plant employees have different roles. Therefore, work performed at the time of inspection, necessary information, and the like are different between the operator and the site worker. On the other hand, for example, since the plant management device 100 can control information to be displayed according to the user, it is possible to provide a user interface according to the user or preferentially provide necessary information according to the user. That is, the plant management device 100 can support work in the inspection of the plant.

The plant management device 100 according to the second example embodiment receives an input of information regarding an abnormality of a specific facility from a display device operated by a site worker of the plant, and displays, the display device being operated by the operator of the plant, the input information regarding the abnormality and the information regarding the specific facility. As a result, the plant management device 100 can provide the operator with the information regarding the abnormality occurring in the specific facility input from the site worker.

At this time, the plant management device 100 can also provide the operator with information regarding a specific facility. The information regarding the specific facility may be, for example, at least one of a repair history of the specific facility, a sensor trend value of a sensor related to the specific facility, and failure estimation data indicating a sign of failure of the specific facility. As a result, the plant management device 100 can preferentially provide the operator with information necessary for planning a measure against the abnormality.

The plant management device 100 according to the second example embodiment receives an input of instruction information including the content of work from display device operated by an operator of the plant, and displays, on the display device being operated by the site worker of the plant, the input instruction information. As a result, the plant management device 100 can provide the site worker with an instruction regarding work input from the operator.

### [First Modification]

The plant model may not include a three-dimensional model indicating the shape and structure of a facility in the plant. For example, the plant model may include a captured image of the facility captured. **In** this case, the portion of the facility illustrated in the captured image is the facility object. The identification object is superimposed on the captured image.

### [Second Modification]

The estimation device 600 may be included in the plant management device 100. That is, the plant management device 100 may estimate the presence or absence of a sign of a failure of the facility.

The plant management device 100 may not include the sensor data management unit 130. That is, the sensor data management unit 130 may be provided in an external device different from the plant management device 100. **In** this case, the external device is communicably connected to at least the sensor 500 and the storage device 400.

### [Third Modification]

The display control unit 110 may cause displaying an object included in the plant model in various modes. For example, the control unit 1102 may cause displaying an object indicating a facility by imparting a different color to each facility. For example, a raw material is present inside a pipe, a tank, and the like. The control unit 1102 may impart a color to the object indicating the facility and cause displaying the object according to the type of the raw material present inside.

The facility of the plant may include a facility for which work on the facility is prescribed by law. For example, a facility in which periodic inspection work is prescribed by law may be present. The display control unit 110 may impart a color to an object indicating a facility of which the work is specified by law.

### [Fourth Modification]

In the above example embodiment, the example in which the operation information displayed by selecting the object included in the plant model is the operation menu has been mainly described. The operation information displayed by selecting the object is not limited to the operation menu. For example, in a case where an object is selected in the worker terminal 200, the display control unit 110 may cause displaying an input form as illustrated in Fig. 7A. For example, when an object is selected in the operator terminal 300, the display control unit 110 may cause displaying an input form as illustrated in Fig. 7D.

### [Fifth Modification]

In the examples of Figs. 10 and 11, the example has been described in which the plant management device 100 outputs various types of information to the operator terminal 300 when the worker inputs the information regarding the abnormality as a starting point. On the other hand, the plant management device 100 may output various types of information to the worker terminal 200 when the operator inputs the instruction information as a starting point.

### <Third Example Embodiment>

Next, a plant management device according to a third example embodiment will be described. In the third example embodiment, further functions of the plant management device will be described. The description of contents overlapping with the contents described in the first and second example embodiments will be partially omitted.

### [Details of Plant Management System 1001]

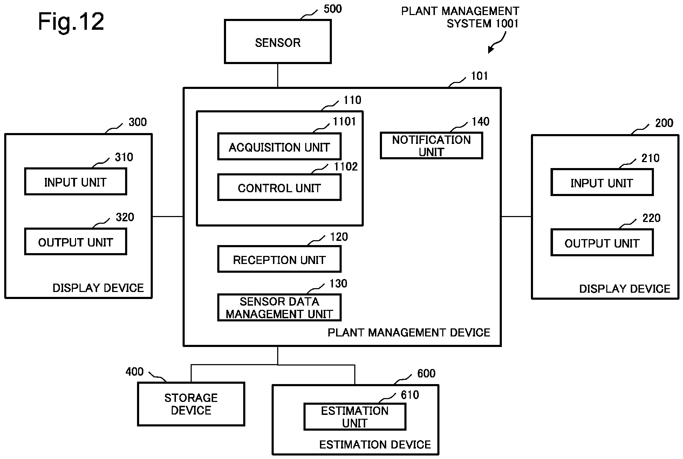

Fig. 12 is a block diagram illustrating an example of a functional configuration of a plant management system 1001. As illustrated in Fig. 12, the plant management system 1001 includes a plant management device 101 instead of the plant management device 100 illustrated in Fig. 4. That is, the plant management system 1001 includes the plant management device 101, the worker terminal 200 (that is, the display device 200), the operator terminal 300 (that is, the display device 300), the storage device 400, the sensor 500, and the estimation device 600. The plant management device 101 can communicate with the display device 200, the display device 300, the storage device 400, the sensor 500, and the estimation device 600 via a wireless or wired network.

The plant management device 101 includes a display control unit 110, a reception unit 120, and a sensor data management unit 130, and a notification unit 140.

When input is made by the user, the notification unit 140 notifies the user who has made the input or another user. Specifically, when input is made by the user, the notification information is transmitted to a display device operated by the user who has made the input or a display device operated by another user. The notification unit 140 is an example of a notification means.

For example, it is assumed that information regarding abnormality is input in the worker terminal 200. The notification unit 140 transmits the notification information to the operator terminal 300. In this case, the notification information includes information indicating that the information regarding the abnormality has been input. Further, the notification information may include facility identification information of a target facility and user identification information of the worker who has performed the input.

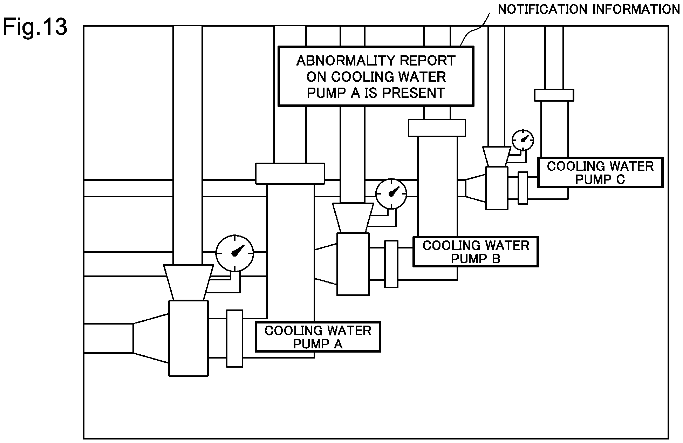

Fig. 13 is a diagram illustrating an example of the notification information. For example, in a case where information regarding abnormality is input in the worker terminal 200, the notification unit 140 superimposes the notification information on the plant model and causes the operator terminal 300 to display the notification information. In the example of Fig. 13, an object describing "Abnormality report regarding cooling water pump A is present" is displayed. In this manner, the notification unit 140 may cause displaying the object indicating the notification information so as to be superimposed on the plant model. In this case, for example, the notification unit 140 transmits the notification information to the operator terminal 300 after the processing of S310 of Fig. 10. As a result, the plant management device 101 can urge the operator to confirm the information regarding the abnormality.

For example, when the object indicating the notification information is selected by the operator, the display control unit 110 may cause displaying the information regarding the abnormality. Here, it is assumed that objects of facilities that are not targets of the information regarding the abnormality are displayed on the operator terminal 300. In a case where the object of the notification information is selected at this time, the display control unit 110 may perform control to cause displaying the object of the facility that is the target of the information regarding the abnormality on the operator terminal 300.

Similarly, it is assumed that instruction information is input in the operator terminal 300. At this time, the notification unit 140 transmits the notification information to the worker terminal 200. The notification information includes information indicating that the instruction information has been input. Further, the notification information may include facility identification information of the target facility and user identification information of the operator who has performed the input. For example, in a case where the instruction information is input in the operator terminal 300, the notification unit 140 superimposes the notification information on the plant model and causes the worker terminal 200 to display the notification information. In this case, for example, the notification unit 140 transmits the notification information to the worker terminal 200 after the processing of S414 of Fig. 11. As a result, the plant management device 101 can urge the worker to confirm the instruction information.

As in Fig. 13, the display control unit 110 may perform control to cause displaying the instruction information when the object of the displayed notification information is selected. It is assumed that objects of facilities that are not targets of instruction information are displayed on the worker terminal 200. In a case where the object of the notification information is selected at this time, the display control unit 110 may perform control to cause displaying the object of the facility as the target of the instruction information on the worker terminal 200.

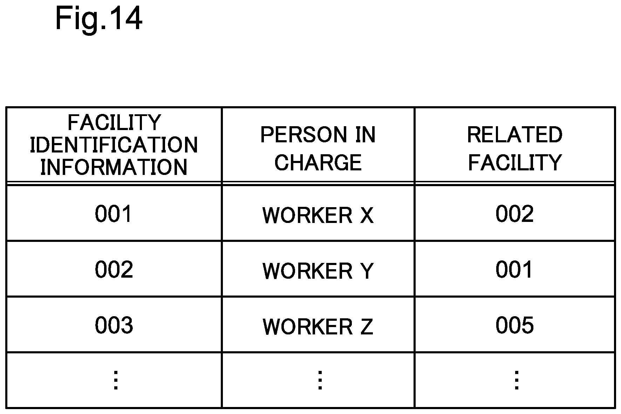

The notification unit 140 may transmit notification information indicating that the instruction information has been input to a predetermined destination. For example, the notification unit 140 transmits the notification information based on the person-in-charge information. The person-in-charge information includes information indicating a worker in charge of each facility. The person-in-charge information is stored in the storage device 400. Fig. 14 is a diagram illustrating an example of the person-in-charge information. For example, it is assumed that the facility identification information of the facility for the work included in the instruction information is "001". At this time, the notification unit 140 notifies a worker X who is in charge of the facility whose facility identification information is "001". That is, the notification unit 140 transmits the instruction information to the display device operated by the worker X.

As described above, the notification unit 140 may performing notification of the instruction information on the display device operated by the person in charge of the facility for the work among the plurality of site workers. As a result, since the plant management device 101 notifies the person in charge of the facility, it is possible to support the work to proceed quickly.

At this time, the notification unit 140 may also notify another person in charge of the instruction information. For example, the notification unit 140 may issue a city notification to a person in charge of a facility related to a facility for the work. A facility related to the facility for the work is also referred to as a related facility. The related facility is, for example, a facility connected to the facility for the work. The related facility is not limited thereto, and may be a facility that is affected by an abnormality in a case where the abnormality occurs in the facility for the work. In the example of Fig. 14, the related facility "002" is associated with the facility identification information "001". For example, it is assumed that the facility identification information of the facility for the work included in the instruction information is "001". In this case, the notification unit 140 notifies the worker X in charge of the facility with the facility identification information "001" and a worker Y in charge of the facility with the facility identification information"002". That is, the notification unit 140 transmits the instruction information to the display device operated by the worker X and the display device operated by the worker Y.

As described above, the notification unit 140 may notify the instruction information to the display device being operated by another person in charge of the facility related to the facility for the work. Depending on the result of the work, a predetermined work may be performed not only on the facility for the work but also on a related facility. The plant management device 101 can support quick information sharing by notifying the person in charge of the related facility of the instruction information.

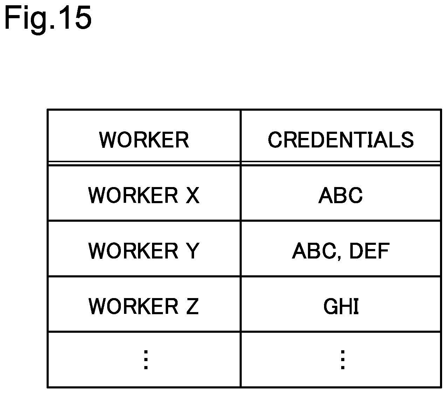

The notification unit 140 is not limited to the above example, and may transmit the notification information based on the credential information. The credential information is information in which a worker and credentials held by the worker are associated with each other. The credential information is stored in the storage device 400. Fig. 15 is a diagram illustrating an example of the credential information. For example, the worker X holds a credential "ABC", and the worker Y holds a credential "ABC" and a credential "DEF".

It is assumed that the work included in the instruction information is work that cannot be worked on unless the person has a specific credential. In this case, the notification unit 140 notifies a worker having a specific credential. For example, it is assumed that the work included in the instruction information is work that cannot be worked on unless the person has a credential "DEF". For example, the notification unit 140 notifies the worker Y holding the credential "DEF" of the instruction information based on the credential information in Fig. 15.

As described above, the notification unit 140 may notify the instruction information to the display device being operated by a site worker having the credential necessary for the work among the plurality of site workers. As a result, the plant management device 101 can notify an appropriate worker of instruction information when instructing a work that requires credentials.

The notification unit 140 may transmit the notification information to the operator terminal 300 in a case where the instruction information is input in the operator terminal 300. Typically, a work procedure manual is present for work performed on the facility of the plant. That is, a work procedure manual relevant to each work is stored in advance in the storage device 400. For example, when inputting instruction information, the operator sets a work procedure manual as work content. Here, the operator may desire to request the worker to perform work different from normal work. That is, the operator may desire to request work for which the work procedure manual does not exist. In this case, it is necessary to newly issue a work procedure manual. Therefore, when the instruction information is input, if the work procedure manual related to the content of the work included in the instruction information is not set, the notification unit 140 transmits notification information prompting issuance of the work procedure manual to the operator terminal 300. For example, in the example of Fig. 11, the notification unit 140 transmits the notification information prompting issuance of a work procedure manual to the operator terminal 300 after S413.

As described above, in a case where the work procedure manual for the work in the input instruction information is not set, the notification unit 140 may perform, on the display device being operated by the operator, a notification for prompting issuance of a work procedure manual corresponding to the work. As a result, the plant management device 101 can suppress forgetting to issue the work procedure manual.

Furthermore, in a case where the instruction information is input in the operator terminal 300, the notification unit 140 may transmit notification information including cautions regarding the facility for the work to the operator terminal 300. The facility included in the plant includes a facility for which a working method is defined by law. For example, depending on a facility, only a person having a specific credential can work, or when performing work, approval of a person in a specific position or application to a specific institution may be required. For example, in a case where a person who does not have a specific credential performs a task that cannot be performed by a person who does not have a specific credential, it may be a violation of the law. Therefore, in a case where a facility that requires a response conforming to the law is selected, the notification unit 140 may issue notification information including cautions indicating that an action conforming to the law is required to the operator.

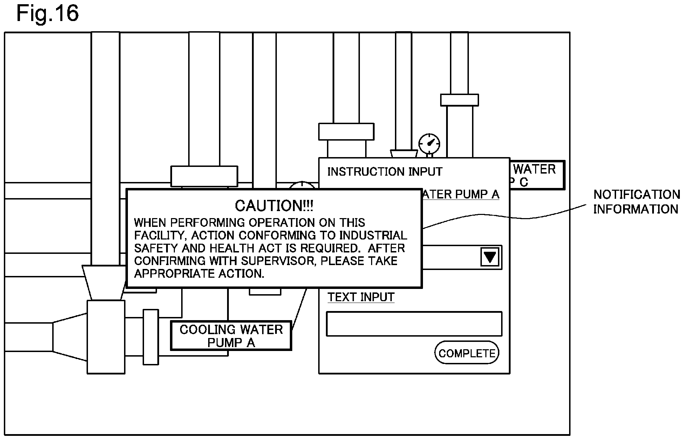

Fig. 16 is a diagram illustrating another example of the notification information. In the example of Fig. 16, notification information including cautions indicating that an action conforming to the law is required is displayed. In this example, when an input form for inputting instruction information is displayed, notification information including cautions is displayed. In this manner, the notification unit 140 may notify the operator of the notification information in a case where the reception unit 120 receives an operation of selecting an item of an operation menu for inputting instruction information and in a case where the target facility is a facility for which a work method is defined by law. Not limited to this example, the notification unit 140 may notify the operator of the notification information in a case where the reception unit 120 receives an operation of selecting an object and in a case where the facility relevant to the selected object is a facility for which a work method is defined by law.

As described above, the notification unit 140 may perform, on the display device being operated by the operator, a notification indicating that an action conforming to the law is required according to the type of the facility for the work. As a result, the plant management device 101 can suppress the possibility of taking an action to the violation of the law.

### [Sixth Modification]

In the above example embodiment, the example in which the site worker is a person has been described, but the site worker may be a robot. The robot may be a patrol inspection robot that inspects a facility. The robot may further include a function of performing imaging and a function of performing failure estimation.

For example, when the operator inputs instruction information, the robot performs work on the target facility based on the instruction information. Then, the robot transmits a work result, which is information regarding a result of performing the work, to the plant management device 101. The work result includes, for example, a value of a sensor when the work is performed and an image obtained by photographing the facility when the work is performed. The work result may include failure estimation data. In this case, for example, the robot estimates the degree of progress of rust and the presence or absence of a sign of abnormality such as liquid leakage from the captured image in which the facility is captured.

The reception unit 120 stores the work result in the storage device 400. Then, the notification unit 140 transmits notification information indicating that the work has been performed to the operator terminal 300.

### <Fourth Example Embodiment>

Next, a plant management device according to a fourth example embodiment will be described. In the fourth example embodiment, further functions of the plant management device will be described. The description of contents overlapping with the contents described in the first, second, and third example embodiments will be partially omitted.

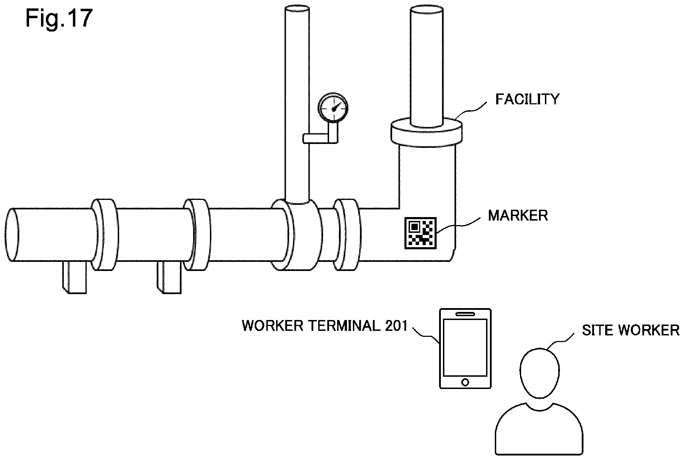

First, an example of a situation in which a plant management system 1002 is used in the present example embodiment will be described. Fig. 17 is a diagram schematically illustrating an example of a usage status of the plant management system 1002. In the example of Fig. 17, a marker is installed in the facility. A worker terminal 201 has a camera function. The site worker captures an image including the marker using the worker terminal 201. The worker terminal 201 extracts information from the captured image and transmits the extracted information to a plant management device 102. The plant management device 102 performs display control of the plant model based on the extracted information.

### [Details of Plant Management System 1002]

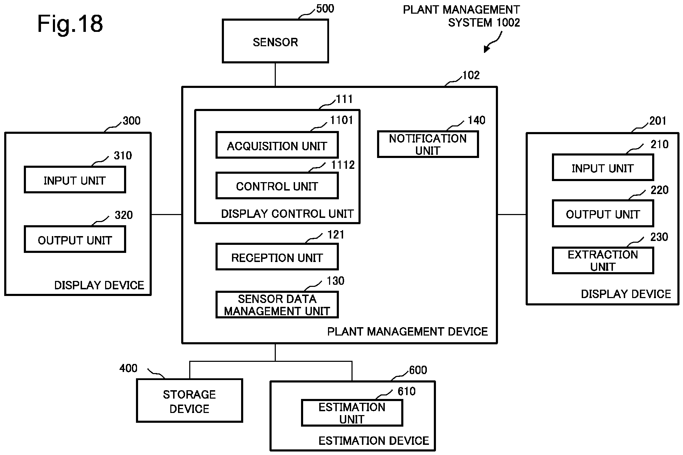

Fig. 18 is a block diagram illustrating an example of a functional configuration of the plant management system 1002. As illustrated in Fig. 18, the plant management system 1002 includes a plant management device 102 instead of the plant management device 100 illustrated in Fig. 4. That is, the plant management system 1002 includes the plant management device 102, the worker terminal 201 (that is, a display device 201), the operator terminal 300 (that is, the display device 300), the storage device 400, the sensor 500, and the estimation device 600. The plant management device 102 can communicate with the display device 201, the display device 300, the storage device 400, the sensor 500, and the estimation device 600 via a wireless or wired network.

The worker terminal 201 includes an input unit 210, an output unit 220, and an extraction unit 230. The input unit 210 includes a function of a camera. That is, the input unit 210 performs photographing. Then, the input unit 210 generates a captured image. The extraction unit 230 extracts information from the marker included in the captured image. The information extracted from the marker is also referred to as extraction information. The marker is installed in a facility, for example. The present invention is not limited to this example, and the marker may be installed near the facility. The marker may be different for each facility. The marker is, for example, a two-dimensional code, but is not limited thereto. For example, the marker may be a symbol indicated by a different shape or color for each facility. The extraction information includes information indicating a facility in which the marker is installed. For example, it is assumed that a marker is installed in one facility. At this time, the extraction unit 230 extracts extraction information including information indicating one facility from the captured image including the marker. As described above, the extraction method includes information indicating at least any facility included in the plant. Then, the extraction unit 230 transmits the extraction information to the plant management device 102.

The plant management device 102 includes a display control unit 111, a reception unit 121, and a sensor data management unit 130, and a notification unit 140.

The reception unit 121 receives the extraction information from the worker terminal 201. More specifically, the reception unit 121 receives extraction information that is information extracted from a marker included in an image captured by a display device operated by a site worker.

The display control unit 111 includes an acquisition unit 1101 and a control unit 1112. The control unit 1112 specifies a facility indicated by the extraction information. Then, the control unit 1112 causes the worker terminal 201 to display the plant model indicating the specified facility. In this manner, the display control unit 111 causes the display device, which is operated by the site worker, to display the plant model indicating the facility indicated by the extraction information.

Here, it is assumed that the operator gives an instruction related to work to the worker. That is, it is assumed that instruction information is input in the operator terminal 300. At this time, the control unit 1112 may display, on the worker terminal 201, information indicating whether the facility indicated by the extraction information is a facility for the work included in the instruction information.

For example, instruction information is displayed on the worker terminal 201. At this time, the input unit 210 of the worker terminal 201 activates an imaging screen. Then, the input unit 210 performs photographing by the operation of the worker. The extraction unit 230 transmits the extraction information and the facility identification information of the facility for the work included in the instruction information. It is assumed that instruction information is input by the operator. At this time, the control unit 1112 displays the plant model indicating the facility indicated by the extraction information, and displays information indicating whether the facility indicated by the extraction information is a facility for the work.

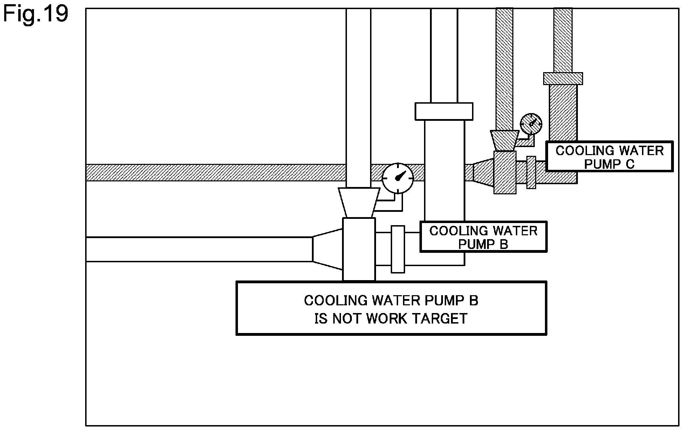

Fig. 19 is a diagram illustrating an example of display based on the extraction information. In the example of Fig. 19, the extraction information includes information indicating the cooling water pump B, and the work target is the cooling water pump C. At this time, the control unit 1112 causes displaying an object indicating the cooling water pump B. Then, the control unit 1112 causes displaying an object including a description of "cooling water pump B is not a work target". On the other hand, the control unit 1112 highlights the object of the cooling water pump C to be worked. In the example of Fig. 19, the object of the cooling water pump C is indicated by hatching. The present invention is not limited to this example, and the control unit 1112 may impart a color to an object of the facility for the work, thicken an outline of the object, or blink the object. The control unit 1112 may cause displaying the object of the facility indicated by the extraction information in a mode different from the object of the facility for the work.

As described above, the display control unit 111 may display, on the display device being operated by the site worker, information indicating whether the facility indicated by the extraction information is a facility for the work.

### [Operation Example of Plant Management System 1002]

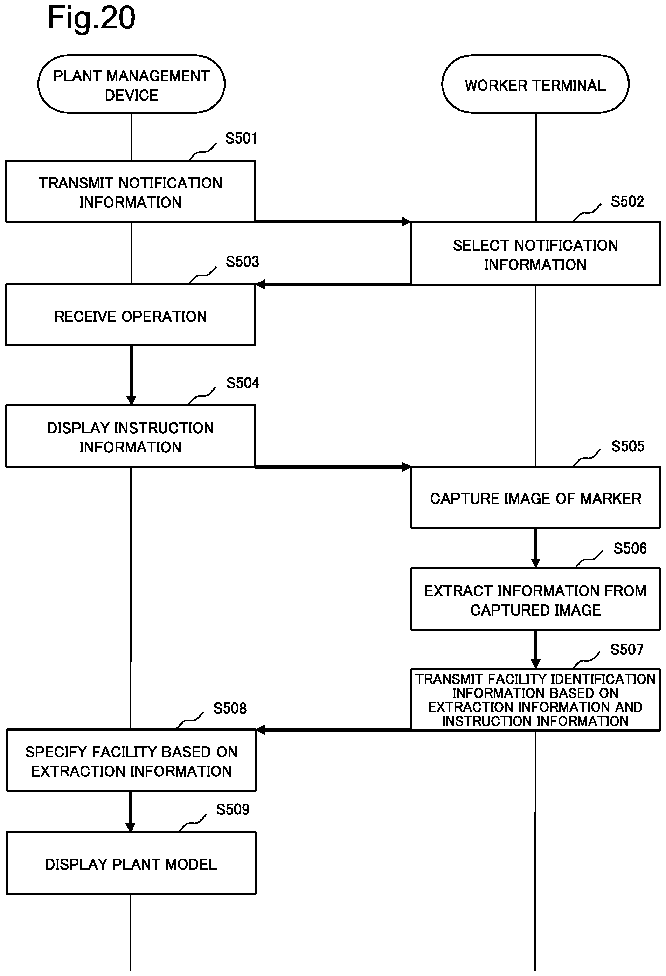

Next, an example of a specific operation of the plant management system 1002 will be described with reference to Fig. 20. In the present operation example, an example in which the plant management device 102 causes the worker terminal 201 to display the plant model based on the extraction information will be described. In the present operation example, it is assumed that instruction information is input in the operator terminal 300.

Fig. 20 is a sequence diagram for explaining an example of the operation of the plant management system 1002. First, the notification unit 140 transmits notification information, which indicates that the instruction information has been input, to the worker terminal 201 (S501). Then, the object indicating the notification information is selected in the input unit 210 of the worker terminal 201 (S502). The reception unit 121 receives an operation of selecting an object (S503). Then, the control unit 1112 displays the instruction information (S504).

Then, in the worker terminal 201, the camera is activated, and the input unit 210 captures an image of the marker (S505). The extraction unit 230 extracts information from the captured image including the marker (S506). Then, the extraction unit 230 transmits the extraction information and the facility identification information based on the instruction information to the plant management device 102 (S507). The facility identification information based on the instruction information is facility identification information of a facility for the work included in the instruction information.

The control unit 1112 specifies a facility based on the extraction information (S508). Then, the control unit 1112 displays the plant model (S509). At this time, the control unit 1112 causes displaying an object indicating the specified facility, and causes displaying information indicating whether the specified facility is a facility for the work on the worker terminal 201.

As described above, the plant management device 102 according to the fourth example embodiment receives the extraction information being the information extracted from the image captured by the display device operated by the site worker, and causes the display device, which is operated by the site worker, to display the plant model indicating the facility indicated by the extraction information. At this time, the extraction information is information extracted from the marker included in the image. The extraction information includes information indicating at least any facility included in the plant. Many facilities are present in the plant. Therefore, the worker may not know which object on the plant model is relevant to the facility being visually observed. On the other hand, the plant management device 102 can cause the worker to confirm the plant model relevant to the facility visually observed by the worker.

The plant management device 102 according to the fourth example embodiment may displays, on the display device being operated by the site worker, information indicating whether the facility indicated by the extraction information is a facility for the work. Since a large number of facilities are present in the plant as described above, the worker may not know which facility is the facility for the work included in the instruction information. On the other hand, since the plant management device 102 causes displaying information indicating whether the facility indicated by the extraction information is a facility for the work, it is possible to present to the worker which facility for the work is included in the instruction information.

### [Seventh Modification]

The extraction unit 230 may be included in the plant management device 102. In this case, the input unit 210 transmits the captured image including the marker and the facility identification information based on the instruction information to the plant management device 102. The extraction unit 230 of the plant management device 102 extracts the extraction information from the captured image. Then, the control unit 1112 causes displaying the plant model based on the extraction information extracted by the extraction unit 230.

### <Configuration Example of Hardware of Plant Management Device>

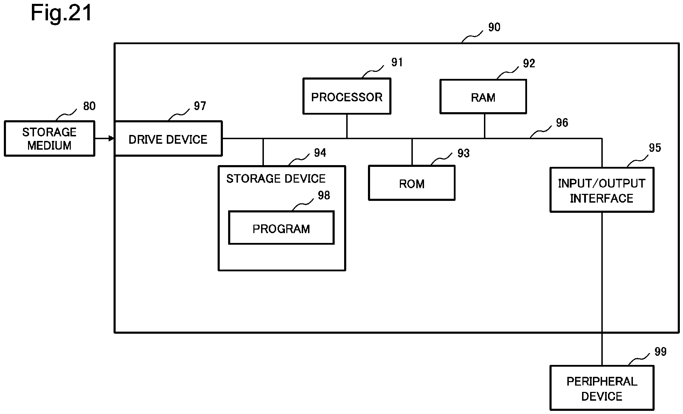

Hardware constituting the plant management device according to the above-described first, second, third, and fourth example embodiments will be described. Fig. 21 is a block diagram illustrating an example of a hardware configuration of a computer device that implements the plant management device according to each example embodiment. In a computer device 90, the plant management device and the plant management method described in each example embodiment and each modification are achieved. More specifically, the plant management device and the plant management method described in each example embodiment and each modification are implemented in the computer device 90.

As illustrated in Fig. 21, the computer device 90 includes a processor 91, a random access memory (RAM) 92, a read only memory (ROM) 93, a storage device 94, an input/output interface 95, a bus 96, and a drive device 97. The plant management device may be implemented by a plurality of electric circuits.

The storage device 94 stores a program (computer program) 98. The processor 91 executes the program 98 of the plant management device using the RAM 92. Specifically, for example, the program 98 includes a program that causes a computer to execute the processing of the signal processing device described in Figs. 2, 8, 9, 10, 11, and 20. The processor 91 executes the program 98 to implement the functions of the components of the present plant management device. The program 98 may be stored in the ROM 93. The program 98 may be recorded in the storage medium 80 and read using the drive device 97, or may be transmitted from an external device (not illustrated) to the computer device 90 via a network (not illustrated).

The input/output interface 95 exchanges data with a peripheral device (keyboard, mouse, display device, etc.) 99. The input/output interface 95 functions as a means for acquiring or outputting data. The bus 96 connects the components

Various modifications of the method of implementing the plant management device are included. For example, the plant management device can be implemented as a dedicated device. The plant management device can be implemented based on a combination of a plurality of devices.

Processing methods for causing a storage medium to record a program for implementing components in a function of each example embodiment, reading the program recorded in the storage medium as a code, and executing the program in a computer are also included in the scope of each example embodiment. That is, a computer-readable storage medium is also included in the scope of each example embodiment. A storage medium in which the above-described program is recorded and the program itself are also included in each example embodiment.

The storage medium is, for example, a floppy (registered trademark) disk, a hard disk, an optical disk, a magneto-optical disk, a compact disc (CD)-ROM, a magnetic tape, a nonvolatile memory card, or a ROM, but is not limited to this example. The program recorded in the storage medium is not limited to a program that executes processing alone, and programs that operate on an operating system (OS) to execute processing in cooperation with other software and functions of an extension board are also included in the scope of each example embodiment.

While the invention has been particularly illustrated and described with reference to example embodiments thereof, the invention is not limited to these example embodiments. It will be understood by those of ordinary skill in the art that various changes in form and details may be made therein without departing from the spirit and scope of the present invention as defined by the claims.

The above-described example embodiments and modifications can be appropriately combined.

Some or all of the above example embodiments may be described as the following Supplementary Notes, but are not limited to the following.

### <Supplementary Notes>

### [Supplementary Note 1]

A plant management device including:
a display control means for displaying a plant model on a display device, the plant model being an image of a facility included in a plant; and
a reception means for receiving an operation of a user on the plant model displayed by the display device, in which
the display control means displays, on the display device being operated by the user, information corresponding to a role of the user and the operation of the user.

### [Supplementary Note 2]

The plant management device according to Supplementary Note 1, in which
the display control means controls in such a way that the information is different based on a type set according to a case where the role of the user is an operator of the plant and a case where the role of the user is a site worker of the plant.

### [Supplementary Note 3]

The plant management device according to Supplementary Note 1 or 2, in which
the reception means receives an operation of selecting an object included in the plant model,
the display control means displays, on the display device being operated by the user, operation information regarding a specific facility indicated by the selected object, and
the operation information regarding the specific facility differs between a case where the role of the user is an operator of the plant or a case where the role of the user is a site worker of the plant.

### [Supplementary Note 4]

The plant management device according to Supplementary Note 3, in which
the reception means receives an input of information regarding an abnormality of the specific facility from a display device operated by the site worker of the plant, and
the display control means displays, a display device being operated by the operator of the plant, the input information regarding the abnormality and the information regarding the specific facility.

### [Supplementary Note 5]

The plant management device according to Supplementary Note 4, in which
the information regarding the specific facility includes at least one of a repair history of the specific facility, a sensor trend value of a sensor related to the specific facility, and failure estimation data indicating a sign of failure of the specific facility.

### [Supplementary Note 6]

The plant management device according to any one of Supplementary Notes 1 to 5, in which
the reception means receives an input of instruction information including a content of work from a display device operated by the operator of the plant, and
the display control means displays, on the display device being operated by the site worker of the plant, the input instruction information.

### [Supplementary Note 7]

The plant management device according to Supplementary Note 6, including:
a notification means for performing, on the display device being operated by the operator, a notification for prompting issuance of a work procedure manual corresponding to the work in a case where the work procedure manual of the work in the input instruction information is not set.

### [Supplementary Note 8]

The plant management device according to Supplementary Note 6 or 7, including:
a notification means for performing, on the display device being operated by the operator, a notification indicating that an action confirming to a law is required according to a type of a facility for the work.

### [Supplementary Note 9]

The plant management device according to any one of Supplementary Notes 6 to 8, including:
a notification means for performing notification of the instruction information on a display device operated by a person in charge of a facility for the work among a plurality of the site workers, in which
the display control means displays, on a display device being operated by the person in charge, the instruction information.

### [Supplementary Note 10]

The plant management device according to Supplementary Note 9, in which
the notification means notifies the instruction information to a display device being operated by another person in charge of a facility related to the facility for the work, and
the display control means displays, on the display device being operated by the another person in charge, the instruction information.

### [Supplementary Note 11]

The plant management device according to any one of Supplementary Notes 6 to 8, including:
a notification means for notifying the instruction information to a display device being operated by a site worker having a credential necessary for the work among a plurality of the site workers, in which
the display control means displays, on the display device being operated by the qualified site worker, the instruction information.

### [Supplementary Note 12]

The plant management device according to any one of Supplementary Notes 6 to 11, in which
the reception means receives extraction information being information extracted from an image captured by the display device operated by the site worker,
the extraction information is information extracted from a marker included in the image,
the extraction information includes information indicating at least any facility included in the plant, and
the display control means displays on the display device being operated by the site worker, a plant model indicating a facility indicated by the extraction information.

### [Supplementary Note 13]

The plant management device according to Supplementary Note 12, in which
the display control means displays on a display device being operated by the site worker, information indicating whether the facility indicated by the extraction information is a facility for the work.

### [Supplementary note 14]

A plant management method including:
displaying a plant model on a display device, the plant model being an image of a facility included in a plant;
receiving an operation of a user on the plant model displayed by the display device; and
displaying, on the display device being operated by the user, information corresponding to a role of the user and the operation of the user.

### [Supplementary note 15]

A computer-readable storage medium storing a program causing a computer to execute:
a process of displaying a plant model on a display device, the plant model being an image of a facility included in a plant; and
a process of receiving an operation by a user on the plant model displayed by the display device, wherein
in the process of displaying, displaying, on the display device being operated by the user, information corresponding to a role of the user and the operation of the user.

### Reference Signs List

100, 101, 102 plant management device
110, 111 display control unit
1101 acquisition unit
1102, 1112 control unit
120, 121 reception unit
130 sensor data management unit
140 notification unit
200, 201 display device
300 display device
400 storage device
500 sensor
600 estimation device

## Claims

1. A plant management device comprising:
a display control means for displaying a plant model on a display device, the plant model being an image of a facility included in a plant; and
a reception means for receiving an operation of a user on the plant model displayed by the display device, wherein
the display control means displays, on the display device being operated by the user, information corresponding to a role of the user and the operation of the user.

2. The plant management device according to claim 1, wherein
the display control means controls in such a way that the information is different based on a type set according to a case where the role of the user is an operator of the plant and a case where the role of the user is a site worker of the plant.

3. The plant management device according to claim 1, wherein
the reception means receives an operation of selecting an object included in the plant model,
the display control means displays, on the display device being operated by the user, operation information regarding a specific facility indicated by the selected object, and
the operation information regarding the specific facility differs between a case where the role of the user is an operator of the plant or a case where the role of the user is a site worker of the plant.

4. The plant management device according to claim 3, wherein
the reception means receives an input of information regarding an abnormality of the specific facility from a display device operated by the site worker of the plant, and
the display control means displays, a display device being operated by the operator of the plant, the input information regarding the abnormality and the information regarding the specific facility.

5. The plant management device according to claim 4, wherein
the information regarding the specific facility includes at least one of a repair history of the specific facility, a sensor trend value of a sensor related to the specific facility, and failure estimation data indicating a sign of failure of the specific facility.

6. The plant management device according to any one of claims 1 to 5, wherein
the reception means receives an input of instruction information including a content of work from a display device operated by the operator of the plant, and
the display control means displays, on the display device being operated by the site worker of the plant, the input instruction information.

7. The plant management device according to claim 6, comprising:
a notification means for performing, on the display device being operated by the operator, a notification for prompting issuance of a work procedure manual corresponding to the work in a case where the work procedure manual of the work in the input instruction information is not set.

8. The plant management device according to claim 6, comprising a notification means for performing, on the display device being operated by the operator, a notification indicating that an action conforming to a law is required according to a type of a facility for the work.

9. The plant management device according to claim 6, comprising
a notification means for performing notification of the instruction information on a display device operated by a person in charge of a facility for the work among a plurality of the site workers, wherein
the display control means displays, on a display device being operated by the person in charge, the instruction information.

10. The plant management device according to claim 9, wherein
the notification means notifies the instruction information to a display device being operated by another person in charge of a facility related to the facility for the work, and
the display control means displays, on the display device being operated by the another person in charge, the instruction information.

11. The plant management device according to claim 6, comprising
a notification means for notifying the instruction information to a display device being operated by a site worker having a credential necessary for the work among a plurality of the site workers, wherein
the display control means displays, on the display device being operated by the qualified site worker, the instruction information.

12. The plant management device according to claim 6, wherein
the reception means receives extraction information being information extracted from an image captured by the display device operated by the site worker,
the extraction information is information extracted from a marker included in the image,
the extraction information includes information indicating at least any facility included in the plant, and
the display control means displays on the display device being operated by the site worker, a plant model indicating a facility indicated by the extraction information.

13. The plant management device according to claim 12, wherein
the display control means displays on a display device being operated by the site worker, information indicating whether the facility indicated by the extraction information is a facility for the work.

14. A plant management method comprising:
displaying a plant model on a display device, the plant model being an image of a facility included in a plant;
receiving an operation of a user on the plant model displayed by the display device; and
displaying, on the display device being operated by the user, information corresponding to a role of the user and the operation of the user.

15. A computer-readable storage medium storing a program causing a computer to execute:
a process of displaying a plant model on a display device, the plant model being an image of a facility included in a plant; and
a process of receiving an operation by a user on the plant model displayed by the display device, wherein
in the process of displaying, displaying, on the display device being operated by the user, information corresponding to a role of the user and the operation of the user.
